# EUROPÄISCHE PATENTSCHRIFT

(11) **EP 0 956 768 B1**
(45) Veröffentlichungstag und Bekanntmachung des Hinweises auf die Patenterteilung: **23.06.2004**
(21) Anmeldenummer: 99102126.2
(22) Anmeldetag: 03.02.1999
(51) Int. Cl.: A01K 63/04

(54) **Aussenfilter, insbesondere für Aquarien**
External filter, specially for aquariums
Filtre extérieur, spécialement pour des aquariums

(30) Priorität: 31.03.1998 DE 19814323
(43) Veröffentlichungstag der Anmeldung: 17.11.1999
(73) Patentinhaber: EHEIM GMBH & CO. KG, D-73779 Deizisau (DE)
(72) Erfinder: Mayer, Ferdinand, 73525 Schwäbisch Gmünd (DE); Wiedenmann, Walter, 73779 Deizisau (DE)
(74) Vertreter: Kratzsch, Volkhard, Dipl.-Ing.

(56) Entgegenhaltungen:
- EP-A- 0 619 070
- EP-A- 0 733 806
- EP-A- 0 738 533
- DE-A- 4 410 561
- DE-A- 19 732 922
- DE-U- 9 311 993
- US-A- 1 760 888
- US-A- 3 297 187
- US-A- 3 669 297
- US-A- 4 895 646

## Beschreibung

Die Erfindung bezieht sich auf einen Außenfilter, insbesondere für Aquarien, der im Oberbegriff des Anspruchs 1 genannten Art.

Bei derartigen Außenfiltern ist häufig die motorisch angetriebene Pumpe nicht selbstansaugend. Dies führt dazu, dass bei bestimmten Zuständen, z. B. beim Abschalten der Pumpe, der Wasserzufluß über die Zuflußleitung zu der das Laufrad der Pumpe enthaltenden Pumpenkammer unterbrochen wird und Luft hineingelangt und dann beim Wiedereinschalten der Pumpe kein Wasser gefördert werden kann. Deshalb haben bekannte Filtereinrichtungen eine bedarfsweise betätigbare Einrichtung zur Erzeugung eines Vakuums, mittels der in die Zuflußleitung unter Verdrängung enthaltener Luft Wasser einsaugbar ist. Diese Einrichtungen bestehen z.B. aus einer mit einem flexiblen Balg versehenen Handpumpe und verschiedenen Ventilen und Leitungen. Die Handhabung solcher Einrichtungen ist zum Teil recht aufwendig und nicht praktikabel.

Es ist ein Außenfilter der eingangs genannten Art bekannt (EP-A 0 733 806), der insbesondere für Aquarien bestimmt ist und ein Gehäuse mit einer entfembaren Abdeckung zum Verschließen des Gehäuseinnenraumes aufweist. Dem Gehäuseinnenraum, in dem sich eine Filtermasse befindet, ist über eine darin ausmündende Zuflußleitung zu filterndes Wasser zuführbar. Das gefilterte Wasser ist aus dem Gehäuseinnenraum über eine Abflußleitung und eine mittels eines Synchronmotors angetriebene Pumpe abführbar. Es ist eine bedarfsweise betätigbare Einrichtung zur Erzeugung eines Vakuums vorgesehen, mittels der durch die Zuflußleitung, die mit Wasser verschlossen ist, unter Verdrängung von darin enthaltener Luft Wasser einsaugbar ist. Die bedarfsweise betätigbare Einrichtung zur Erzeugung des Vakuums besteht aus einer hin- und hergehenden Vakuumpumpe, die in den hydraulischen Kreislauf eingeschaltet ist, der aus der Zuflußleitung, dem Inneren des Filtergehäuses und der Abflußleitung gebildet ist. Diese Vakuumpumpe kann auf der Saugseite der Filterpumpe einen Unterdruck erzeugen, so dass Wasser aus dem Aquarium durch die Zuflußleitung angesaugt wird und die Filterpumpe anlaufen kann. Zunächst ist die Vakuumpumpe nicht betätigt, deren Betätigung durch Herunterdrücken eines Drückers gegen die Wirkung einer Feder erfolgt, womit zugleich eine seitlich abstehende Fahne nach unten wandert, die zuvor in einer anderen Stellung einen an einem Schwingarm sitzenden Magneten unbeweglich gelagert hat. Durch Herunterfahren der Fahne wird dieser Magnet frei, der durch das Magnetfeld des Synchronmotors in eine oszillierende Bewegung versetzt wird, wodurch über den Schwingarm eine Gummikappe, die das Innere eines Behälters abschließt, ebenfalls in Schwingung versetzt wird. In diesem Behälter ist ein Einlaßventil und ein Auslaßventil enthalten. Durch die in Schwingung versetzte Gummikappe wird das Einlaßventil bzw. das Auslaßventil aktiviert. Beim Herunterdrücken des Drückers wird außerdem ein besonderer Ventilkörper in einem Ventilgehäuse ebenfalls heruntergedrückt, so dass dieser eine untere Ventilöffnung freigibt, wodurch die Saugseite mit einem Rohr dieses Ventilgehäuses verbunden wird. Somit wird durch Öffnen des Ventils das Gehäuseinnere mit der Vakuumpumpe verbunden, wodurch ein Absaugen zum Erzeugen eines Vakuums möglich ist. Aufgrund dieser Gestaltung ist unter Verdrängung enthaltener Luft in der Zuflußleitung Wasser dadurch einsaugbar, dass das aus dem Gehäuseinnenraum und der anschließenden Abflußleitung bestehende und mit der Zuflußleitung kommunizierende System während der Erzeugung des Vakuums als evakuierbarer Druckraum nach außen hermetisch dicht abgeschlossen ist und das Vakuum innerhalb dieses abgeschlossenen System erzeugt wird, wobei letzteres durch die erläuterte Vakuumpumpe geschieht. Diese besondere Vakuumpumpe stellt ein zusätzliches Bauteil dar und bedeutet einen entsprechend großen Aufwand. Auch die übrigen Bauteile bedeuten einen relativ großen Aufwand.

Der Erfindung liegt daher die Aufgabe zugrunde, bei einem Außenfilter der eingangs genannten Art eine Vereinfachung für die Erzeugung des Vakuums und das Ansaugen von Wasser durch die Zuflußleitung zu erreichen.

Die Aufgabe ist bei einem Außenfilter der eingangs genannten Art gemäß der Erfindung durch die Merkmale im Anspruch 1 gelöst. Dadurch, dass die Einrichtung zur Erzeugung eines Vakuums aus Teilen des Außenfilters selbst gebildet ist, die etwa wie der Kolben in einem Gehäuse einer Pumpe relativ zueinander bewegbar sind, ist eine Vakuumpumpe in besonders einfacher Konstruktion und mit geringem Aufwand verwirklicht. Die besonders einfache Gestaltung ergibt sich dadurch, dass für die Erzeugung des Vakuums Teile des Außenfilters selbst herangezogen sind und es hierzu besonderer weiterer Bauteile oder Elemente nicht bedarf.

Weitere Erfindungsmerkmale und vorteilhafte Ausgestaltungen ergeben sich aus den Ansprüchen 2 bis 35.

Durch die Merkmale im Anspruch 5 und 6 wird erreicht, dass das Ventil nach Ansaugen von Wasser in die Zuflußleitung und bis in den Bereich des Gehäuseinnenraumes einen gegensinnigen Rückfluß des Wasser sperrt, wie diese z. B. aus EP 0 619 070 B1 bekannt ist. Daraus ist bei einem Außenfilter ein Ventil bekannt, das die Zuverlässigkeit der Ansaugvorrichtung auf der Ansaugseite erhöhen soll. Das Ventil ist von einer behälterartigen Fangvorrichtung gebildet, die fest an die untere Wand des Deckels des Außenfilters angekoppelt ist und in die das untere Ende eines rohrförmigen Einlaßanschlußstückes hineinführt. Solange die Fangvorrichtung mit Wasser gefüllt ist und ebenfalls das darin eintauchende Einlaßanschlußstück, wird ein gegensinniger Rückfluß des Wassers nach Ansaugen in die Zuflußleitung und in den Bereich des Gehäuseinnenraums gesperrt. Durch die Merkmale gemäß Anspruch 12 ist die Handhabung des Außenfilters bezüglich des Ablösens und des Abnehmens der Abdeckung vom Gehäuse erheblich vereinfacht. Weitere vorteilhafte Maßnahmen und Ausgestaltungen hierzu enthalten die Ansprüche 13 bis 16. Eine weitere vorteilhafte Gestaltung ergibt sich aus Anspruch 17 mit dem Vorteil, dass dadurch die der Handhabung der Abdeckung dienende Betätigungseinrichtung zugleich in einfacher Weise dazu wirksam ist, die aus Teilen des Außenfilters selbst gebildete Einrichtung zur Erzeugung eines Vakuums zu betätigen, z.B. die Abdeckung relativ zum Gehäuse anzuheben und/oder zumindest geringfügig schräg zu stellen.

Weitere Merkmale der Erfindung sowie vorteilhafte Ausgestaltungen ergeben sich aus den übrigen Ansprüchen 18 bis 35. Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht eines Teils eines Außenfilters und eines Aquariums gemäß einem ersten Ausführungsbeispiel,
- Fig. 2: eine schematische perspektivische Ansicht eines Außenfilters gemäß einem zweiten Ausführungsbeispiel bei in Schließstellung befindlicher Abdeckung und in Ausgangsstellung befindlichem Bügel,
- Fig. 3: eine schematische perspektivische Ansicht des Außenfilters in Fig. 2, jedoch in einer anderen Stellung der Abdeckung und bei in seiner ersten Endstellung befindlichem Bügel,
- Fig. 4: eine schematische perspektivische Ansicht eines Außenfilters gemäß einem dritten Ausführungsbeispiel, bei dem sich die Abdeckung in ihrer entnahmebereiten Endstellung und der Bügel in seiner zweiten Endstellung befinden,
- Fig. 5: eine schematische perspektivische Ansicht des Außenfilters in Fig. 4, jedoch bei in Schließstellung befindlicher Abdeckung und in Ausgangsstellung befindlichem Bügel,
- Fig. 6: eine schematische perspektivische Ansicht des Außenfilters in Fig. 4, bei der sich jedoch die Abdeckung in einer anderen Stellung und der Bügel in seiner ersten Endstellung befinden,
- Fig. 7: eine schematische perspektivische Ansicht eines Außenfilters gemäß einem vierten Ausführungsbeispiel, wobei sich die Abdeckung in ihrer Schließstellung befindet,
- Fig. 8: eine schematische perspektivische Ansicht des Außenfilters in Fig. 7, wobei sich die Abdeckung jedoch in einer demgegenüber angehobenen Stellung befindet,
- Fig. 9: eine schematische perspektivische Ansicht des Außenfilters in Fig. 7, bei der sich die Abdeckung in einer abnahmebereiten Endstellung befindet,
- Fig. 10: eine schematische perspektivische Ansicht des Außenfilters in Fig. 7 bei herausgenommener Abdeckung,
- Fig. 11: einen schematischen Schnitt entlang der Linie XI-XI des Außenfilters in Fig. 10.

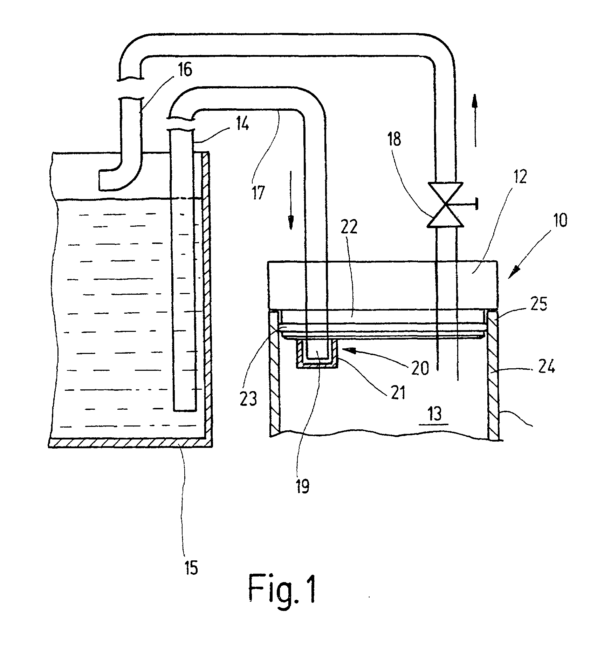

Zunächst ist nachfolgend anhand von Fig. 1 das der Erfindung zugrundeliegende Grundprinzip erläutert. Fig. 1 zeigt schematisch einen Teil eines Außenfilters 10, insbesondere für Aquarien, der ein z.B. zylindrisches Gehäuse 11 mit einer oberseitigen, entfernbaren Abdeckung 12 zum Verschließen des Innenraumes 13 des Gehäuses 11 aufweist. Diesem Innenraum 13 ist über eine nur angedeutete Zuflußleitung 14 aus einem Aquariumbecken 15 abgesaugtes Wasser zuführbar, das über eine Abflußleitung 16 zurück in das Aquariumbecken 15 geführt wird. Die Abdeckung 12 ist mit Vorzug als Pumpenkopf gestaltet, der eine motorisch angetriebene Pumpe für den Transport des Wassers enthält. Im Gehäuse 11 befindet sich in üblicher Weise geeignetes Filtermaterial, durch das das über die Zuflußleitung 14 eingeleitete Wasser zur Filtrierung hindurchgeleitet wird, so daß das über die Abflußleitung 16 in das Aquriumbecken 15 zurückgeführte Wasser gefiltert ist. Die in der Abdeckung 12 befindliche motorisch angetriebene Pumpe ist nicht selbstansaugend. Daraus ergibt sich das Problem, daß das aus dem Innenraum 13 und der anschließenden Abflußleitung 16 bestehende und mit der Zuflußleitung 14 kommunizierende System bei Abreißen der Flüssigkeitströmung darin Luft enthalten kann und somit der an die Abdeckung 12 angeschlossene, etwa umgekehrt U-förmig verlaufende Abschnitt 17 der Zuflußleitung 14 kein Wasser enthält. Beim Anlaufen der Pumpe ist diese dann nicht in der Lage, Wasser durch die Zuflußleitung 14 anzusaugen. Hier schafft eine bedarfsweise betätigbare Einrichtung zur Erzeugung eines Vakuums Abhilfe, mittels der in die Zuflußleitung 14 unter Verdrängung enthaltener Luft Wasser einsaugbar ist, so daß die das Laufrad der Pumpe enthaltende Pumpenkammer mit Wasser gefüllt ist, das aus der Zuflußleitung 14 nachläuft.

Die Besonderheit des Außenfilters 10 gemäß der Erfindung liegt darin, daß das aus Innenraum 13 und anschließender Abflußleitung 16 bestehende und mit der Zuflußleitung 14 kommunizierende System während der Erzeugung des Vakuums nach außen hermetisch dicht abgeschlossen ist und als evakuierbarer Druckraum dient und daß die Evakuierungseinrichtung das Vakuum innerhalb dieses abgeschlossenen Systems erzeugt. Dabei kann diese Einrichtung das Vakuum innerhalb des Innenraums 13 und/oder der Zuflußleitung 14 oder auch innerhalb der Abflußleitung 16 erzeugen.

Die Abflußleitung 16 weist an irgend einer Stelle, z.B. nahe der Abdeckung 12 oder mit dieser integriert, ein nur schematisch dargestelltes Ventil 18 auf. Das Ventil 18 ist z.B. manuell betätigbar oder besteht statt dessen aus einem selbsttätig arbeitenden Ventil, z.B. Rückschlagventil. Das Ventil 18 arbeitet so, daß dieses sich zunächst in der Schließstellung befindet, wenn die Evakuierungseinrichtung zum Ansaugen des Wassers in den U-förmigen Abschnit 17 hinein betätigt wird. Sobald das angesaugte Wasser im Abschnitt 17 und in den Innenraum 13 fließt, öffnet das Ventil 18, um diese Fließwirkung aufrecht zu erhalten.

In Fig. 1 ist nur schematisch angedeutet, daß ein Teil der Zuflußleitung 14 in der Abdeckung 12 enthalten ist und dieser Teil mit seinem Ende an irgend einer geeigneten Stelle frei in den Innenraum 13 ausmündet, wie dies z.B. nur schematisch für den Abschnitt 19 gezeigt ist. Dieser in der Abdeckung 12 verlaufende Teil der Zuflußleitung 14 weist am Auslaß, z.B. am Auslaß des schematisch dargestellten Abschnitts 19, der zum Innenraum 13 weist, ein allgemein mit 20 angedeutetes Ventil auf, das nach Ansaugen von Wasser in die Zuflußleitung 14 einen gegensinnigen Rückfluß des Wassers mit Luftansaugung sperrt. In Fig. 1 ist als Ventil 20 ein nur schematisch angedeutetes Auffangbehältnis 21 für Wasser vorgesehen, in das der Auslaß des Abschnitts 19 ausmündet. Es versteht sich, daß dieses Ventil 20 auch anders gestaltet sein kann.

Bei einem Außenfilter ist zur Erzeugung eines Vakuums eine Saugpumpe, z. B. eine Balgpumpe, Kolbenpumpe od. dgl. denkbar, die mit ihrer Saugseite mit dem aus dem Innenraum 13 und dem bis zum Ventil 18 reichenden Abschnitt der Abflußleitung 16 bestehenden und mit der Zuflußleitung 14 kommunizierenden System in Verbindung steht. Zum Ansaugen von Wasser über den U-förmigen Abschnitt 17 hinweg wird zunächst das Ventil 18 geschlossen und dann die Saugpumpe betätigt, über die in diesem beschriebenen System Wasser durch den U-förmigen Abschnitt 17 bis hin zur Abdeckung 12 und in den Innenraum 13 eingesaugt wird, woraufhin das Ventil 18 geöffnet wird, um den Wasserfluß aufrecht zu erhalten.

Beim gezeigten Ausführungsbeispiel ist die Einrichtung zur Erzeugung eines Vakuums aus Teilen des Außenfilters 10 selbst gebildet, was besonders einfach ist. So ist hierbei zumindest ein Teil der Abdeckung 12 oder die gesamte Abdeckung, z.B. in Form des beschriebenen Pumpenkopfes, vorzugsweise etwa nach Art des Kolbens einer Pumpe, relativ zum Gehäuse 11 zur Erzeugung des Vakuums bewegbar. In einfacher Weise ist hierbei die gesamte Abdeckung 12 relativ zum Gehäuse 11 anhebbar und/oder kippbar.

Bei einem anderen, nicht gezeigten Ausführungsbeispiel ist statt dessen zumindest ein Teil des Gehäuses 11 relativ zu einem anderem Teil des Gehäuse 11 und/oder der Abdeckung 12 zur Erzeugung eines Vakuums bewegbar.

In Fig. 1 ist schematisch angedeutet, daß die Abdeckung 12 mit einem im Durchmesser kleineren Absatz 22, der eine Dichtung 23, z.B. einen O-Ring, trägt, in das Innere des Gehäuses 11 eingreift. Ferner ist angedeutet, daß die Wandung 24 des Gehäuses 11 an einer Stelle im Bereich des oberen Endes eine Entlüftungsöffnung 25 enthält, wobei die Entlüftungsöffnung 25 in Abstand oberhalb der Dichtung 23 vorgesehen ist. In diesem Fall bedarf es des Ventils 18 nicht, weil beim Anheben und/oder Kippen der Abdeckung 12 ein Teil der Abdeckung 12 in seiner nach Erzeugung des Vakuums erreichten Stellung den Innenraum 13 über die Entlüftungsöffnung 25 nach außen entlüftet, sobald beim Anheben und/oder Kippen der Abdeckung 12 nach oben die Dichtung 23 den Bereich der Entlüftungsöffnung 25 erreicht hat. Der Hubweg der Abdeckung 12 bis zum Erreichendieser Entlüftung, der etwa dem Kolbenhub einer Kolbenpumpe entspricht, ist somit so bemessen, daß nach Durchlaufen dieses Kolbenhubes die Ansaugung von Wasser durch den U-förmigen Abschnitt 17 erfolgt ist und erst dann, wenn das Wasser einfließt, die Entlüftungsöffnung 25 freigegeben wird und über diese der Innenraum 13 nach außen entlüftet wird.

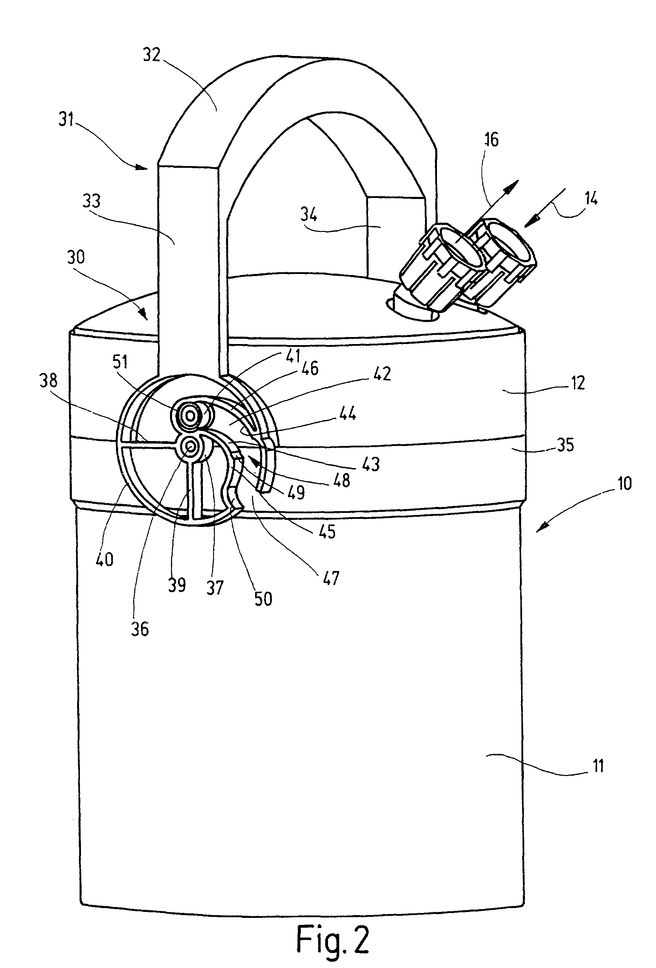

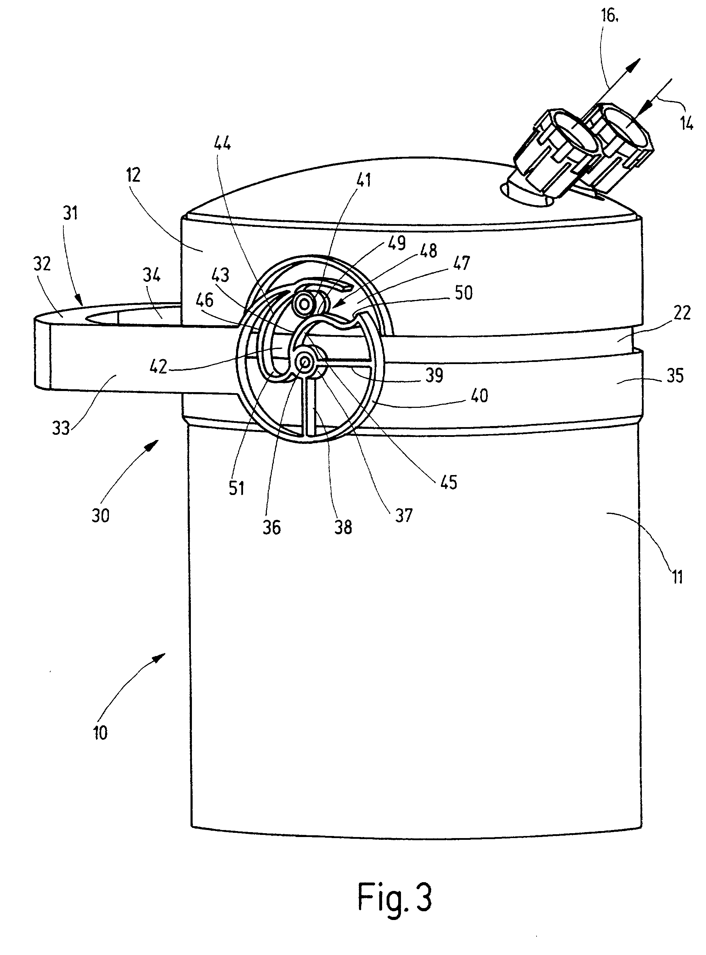

Bei dem in Fig. 2 und 3 gezeigten zweiten Ausführungsbeispiel sind für die Teile, die dem ersten Ausführungsbeispiel in Fig. 1 entsprechen, gleiche Bezugszeichen verwendet, sodaß dadurch zur Vermeidung von Wiederholungen auf die Beschreibung des ersten Ausführungsbeispieles Bezug genommen ist.

In Fig. 2 und 3 ist von der Zuflußleitung 14 und der Abflußleitung 16, die schematisch mittels Pfeilen verdeutlicht sind, lediglich ein Anschlußstutzen an der Abdeckung 12 für den Anschluß entsprechender Leitungen vorgesehen. Die innerhalb der Abdeckung 12 verlaufenden Teile der Zuflußleitung 14 und Abflußleitung 16 sind nicht besonders dargestellt.

Der Außenfilter 10 weist eine Betätigungseinrichtung 30 auf, die an der Abdeckung 12 angreifen kann und mittels der die Abdeckung 12 unter Aufhebung des Dichtungszustandes gemäß Fig. 1 bis zu einer abnahmebereiten Endstellung für eine manuelle Abhebung geöffnet werden und aus dem Gehäuse 11 herausbewegt werden kann und mittels der die Abdeckung 12 gegensinnig nach Aufsetzen unter Herbeiführung des Dichtzustandes gemäß Fig. 1 schließbar und in das Gehäuse 11 bewegbar sowie in dieser Schließstellung halterbar ist.

Diese Betätigungseinrichtung 30 weist einen umgekehrt etwa U-förmigen Bügel 31 mit Oberteil 32 und beidseitigen Schenkeln 33,34 auf, mit denen der Bügel 31 am oberen Rand 35 des Gehäuses 11 um eine etwa horizontale und in bezug auf das zylindrische Gehäuse 11 diametral verlaufende Schwenkachse 36 schwenkbar gelagert ist. Der Bügel 31 ist so dimensioniert, daß er die Abdeckung 12 mit Abstand übergreift. Zur Lagerung um die Schwenkachse 36 dienen z.B. dortige Achsstifte am Gehäuse 11 einerseits und auf den Achsstiften sitzende Lagerhülsen 37 andererseits, die fester Bestandteil des Bügels 31 sind. Davon ist in Fig. 2 und 3 nur eine Lagerhülse 37 des Schenkels 33 sichtbar, wobei der andere Schenkel 34 in gleicher Weise gelagert ist. Die Lagerhülse 37 ist über Speichen 38 und 39 und einen Ringteil 40 mit dem Bügel 31, und zwar dessen Schenkel 33, einstückig verbunden. Der Bügel 31 besteht z.B. aus einem einstückigen Kunststofformteil und ist mit den Lagerhülsen 37 jeweils auf die zugeordneten Achsstifte aufgesetzt. Die Abdeckung 12 ist bei Bedarf gänzlich entfernbar. Der Bügel 31 bildet zugleich einen Handgriff zum Tragen des gesamten Außenfilters 10.

Zwischen dem Gehäuse 11 und der Abdeckung 12 sind getriebliche Mittel vorgesehen, über die es möglich ist, durch Schwenkbetätigung des Bügels 31 um die Schwenkachse 36 die Abdeckung 12 anzuheben bzw. abzusenken und/oder zumindest in Grenzen in Schräglage zu kippen. Diese getrieblichen Mittel bestehen beim zweiten Ausführungsbeispiel in Fig. 2 und 3 aus beidseitigen Nocken 41 in Form von Rollen einerseits und aus den Nocken 41 zugeordneten Kulissenbahnen 42 andererseits, die miteinander in Eingriff stehen bzw. in Eingriff bringbar sind. Von diesen getrieblichen Mitteln sind in Fig. 2 und 3 lediglich die auf der Seite des Schenkels 33 sichtbar. Es versteht sich gleichwohl, daß auf der anderen, dem Schenkel 34 zugeordneten Seite ebensolche getrieblichen Mittel vorgesehen sind. Die jeweils dem Nocken 41 zugeordnete Kulissenbahn 42 weist eine Hubkurve 43 und in Abstand von dieser eine Senkkurve 44 auf, mit der der Nocken 41 je nach Schwenkbetätigung des Bügels 31 in Eingriff steht bzw. bringbar ist. Die Hubkurve 43 und die Senkkurve 44 ist jeweils aus einem etwa bogenförmigen Steg 45 bzw. 46 gebildet, der fester Bestandteil des Bügels 31 ist. Der Steg 45 reicht von der Lagerhülse 37 zum Ringteil 40. Der Steg 46 reicht ebenfalls etwa von der Lagerhülse 37 zum Ringteil 40, wobei letzterer am Ende und zwischen beiden Stegen 45,46 eine Öffnung 47 zum Einfahren des Nockens 41 aufweist. An dieser Stelle ist zwischen den jeweiligen Enden der Stege 45 und 46 mit Hubkurve 43 und Senkkurve 44 ein entsprechender Zwischenraum gebildet, der groß genug ist, daß der Nocken 41 dazwischen paßt.

Beim gezeigten Ausführungsbeispiel in Fig. 2 und 3 sind die Stege 45, 46 mit Hubkurve 43 bzw. Senkkurve 44 daran am Bügel 31 und der Nocken 41 an der Abdeckung 12 angeordnet. Es versteht sich gleichwohl, daß bei einem anderen, nicht gezeigten Ausführungsbeispiel die Verhältnisse kinematisch umgekehrt sein können.

Bei der beschriebenen Gestaltung dient die Betätigungseinrichtung 30 zum einen dazu, daß die Abdeckung 12, soll sie vom Gehäuse 11 abgenommen werden, einfacher und leichter gelöst werden kann unter Aufhebung des Kontaktes zwischen der Dichtung 23 und der Wandung 24 des Gehäuses 11 (Fig. 1). Erfahrungsgemäß führt die Schließstellung (Fig. 1 und 2) nämlich zu einer festen Haftung zwischen der Dichtung 23 und der Wandung 24, die sich von Hand nur relativ schwer überwinden läßt. Durch Schwenkbetätigung des Bügels 31, ausgehend von der Ausgangsstellung in Fig. 2,um die Schwenkachse 36 im Gegenuhrzeigersinn ist ein Anheben der Abdeckung 12 und/oder Kippen mit geringer Schräglage möglich bis hin zu der in Fig. 3 gezeigten ersten Endstellung des Bügels 31, die dieser nach 90°-Schwenkwinkel einnimmt, und bis hin zu der nach oben verschobenen Stellung der Abdeckung 12, die sich nach Anhebung und/oder Kippen der Abdeckung 12 unter Erzeugung des Vakuums ergibt, ohne daß der Dichtzustand zwischen Abdeckung 12 und Gehäuse 11 in Fig. 3 aufgehoben wäre. Die Schwenkbetätigung des Bügels 31 dient somit zugleich zur Erzeugung des Vakuums im Innenraum 13 durch Anheben der Abdeckung 12 relativ zum Gehäuse 11 und dadurch Vergrößern des Volumens im Inneren des Außenfilters 10.

Die Betätigungseinrichtung 30 weist eine Rasteinrichtung 48 auf, mittels der der Bügel 31 in der in Fig. 3 gezeigten ersten Endstellung verrastbar ist. Beim gezeigten Ausführungsbeispiel ist diese Rasteinrichtung 48 durch einen überrastbaren Anschlag 49,z.B. in Form einer Erhöhung,der Hubkurve 43 gebildet. Wird der Hebel 31 von der Ausgangsstellung (Fig. 2) in die erste Endstellung (Fig. 3) geschwenkt, so schlägt der Anschlag 49 am Nocken 41 an, wodurch für die Bedienungsperson signalisiert ist, daß damit die Schwenkbewegung zur Erzeugung des Vakuums im Innenraum 13 abgeschlossen ist und eine weitere Schwenkbewegung des Bügels 31 in gleicher Schwenkrichtung über die erste Endstellung hinaus zur Aufhebung des Dichtzustandes führen würde.

Die Betätigungseinrichtung 30 weist vorzugsweise am Ende der Hubkurve 43 einen ersten Endanschlag 50 in Form einer stärkeren Krümmung des Steges 45 auf, mittels dessen der Bügel 31 in einer über die erste Endstellung gemäß Fig. 3 hinausgehenden zweiten Endstellung blockierbar ist, welche einer dem Anheben und/oder Kippen der Abdeckung 12 folgenden, abnahmebereiten Endstellung der Abdeckung 12 entspricht.

Die Betätigungseinrichtung 30 weist ferner einen zweiten Endanschlag 51 am Ende der Kulissenbahn 42, vorzugsweise am Ende der beiden dort ineinander übergehenden Stege 45 und 46, auf. Dieser zweite Endanschlag 51 ist durch eine Krümmung, die beide Stege 45,46 verbindet, gebildet. Mittels dieses zweiten Endanschlages 51 ist der Bügel 31 in seiner Ausgangsstellung gemäß Fig. 2 blockierbar, die der Schließstellung der Abdeckung 12 entspricht.

Wie ersichtlich ist, ist beim zweiten Ausführungsbeispiel in Fig. 2 und 3 der Bügel 31 somit, ausgehend von seiner Ausgangsstellung in Fig. 2, in einer dem Gegenuhrzeigersinn entsprechenden Schwenkrichtung zunächst in seine erste Endstellung gemäß Fig. 3 schwenkbar, um im Innenraum 13 ein Vakuum zu erzeugen und Luft abzusaugen und Wasser anzusaugen, und aus dieser ersten Endstellung gemäß Fig. 3 heraus in gleicher Schwenkrichtung in eine darüber hinausgehende zweite Endstellung, die nicht gezeigt ist, schwenkbar, die durch Anschlagen des ersten Endanschlages 50 am Nocken 41 begrenzt wird. In dieser zweiten Endstellung des Bügels 31 befindet sich die Öffnung 47 oben, so daß bei einer weiteren Vertikalbewegung der Abdeckung 12 nach oben der jeweiligen Nocken 41 aus der zugeordneten Kulissenbahn 42 heraustreten kann. Wird die abgenommene Abdeckung 12 gegensinnig wieder auf das Gehäuse 11 aufgesetzt, so fährt auf jeder Seite der Nocken 41 durch die Öffnung 47 in die zugeordnete Kulissenbahn 42 zwischen den Stegen 45,46 ein.

Eine gegensinnige Schwenkbewegung des Bügels 31 nunmehr im Uhrzeigersinn aus der zweiten Endstellung heraus führt dazu, daß die Senkkurve 44 am jeweiligen Nocken 41 angreift und dadurch die Abdeckung 12 mit ihrem Absatz 22 in das Gehäuse 11 hineingezogen wird, wobei diese Schwenkbewegung des Bügels 31 durch Anschlagen des zweiten Endanschlages 51 am Nocken 41 begrenzt wird und dann der Bügel 31 die in Fig. 2 gezeigte Ausgangsstellung einnimmt. Der Bügel 31 ist somit über einen Schwenkwinkel größer als 90° schwenkbar, und zwar von der Ausgangsstellung (Fig. 2) in die erste Endstellung (Fig. 3) um etwa 90° und ausgehend von der ersten Endstellung (Fig. 3) in die nicht gezeigte zweite Endstellung noch einmal etwa um z.B. bis zum 45°, so daß sich insgesamt ein Schwenkwinkel z.B. in der Größenordnung von 135° ergibt.

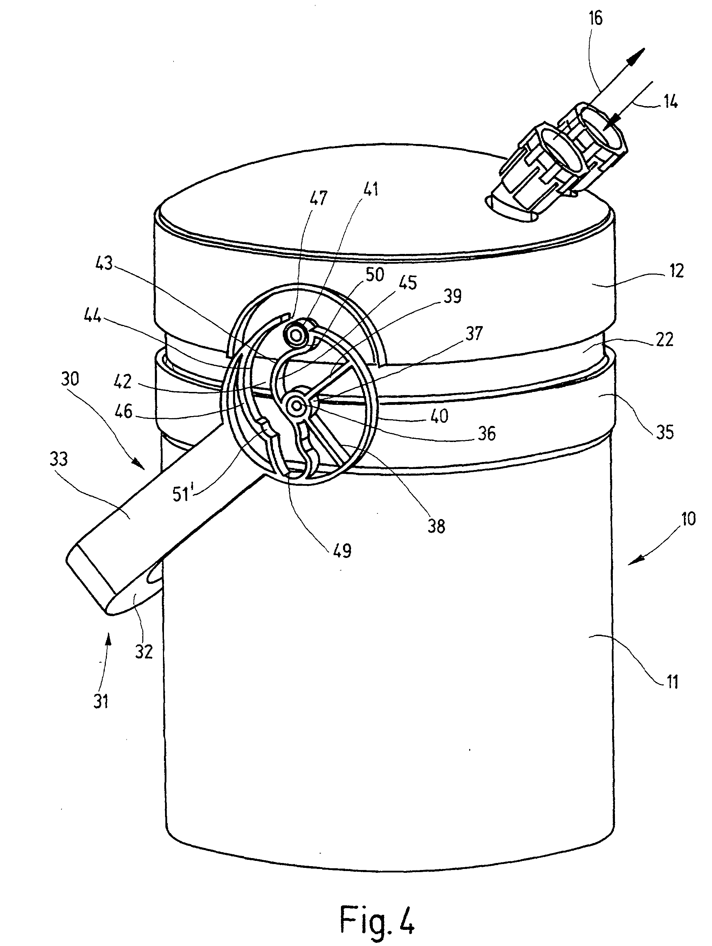

Bei dem in Fig. 4 - 6 gezeigten dritten Ausführungsbeispiel sind aus den zuvor genannten Gründen für gleiche Teile gleiche Bezugszeichen verwendet.

Das dritte Ausführungsbeispiel unterscheidet sich vom zweiten Ausführungsbeispiel allein dadurch, daß die Kulissenbahn 42 anders gestaltet ist und dabei sich über einen noch größeren Schwenkwinkel des Bügels 31 erstreckt.

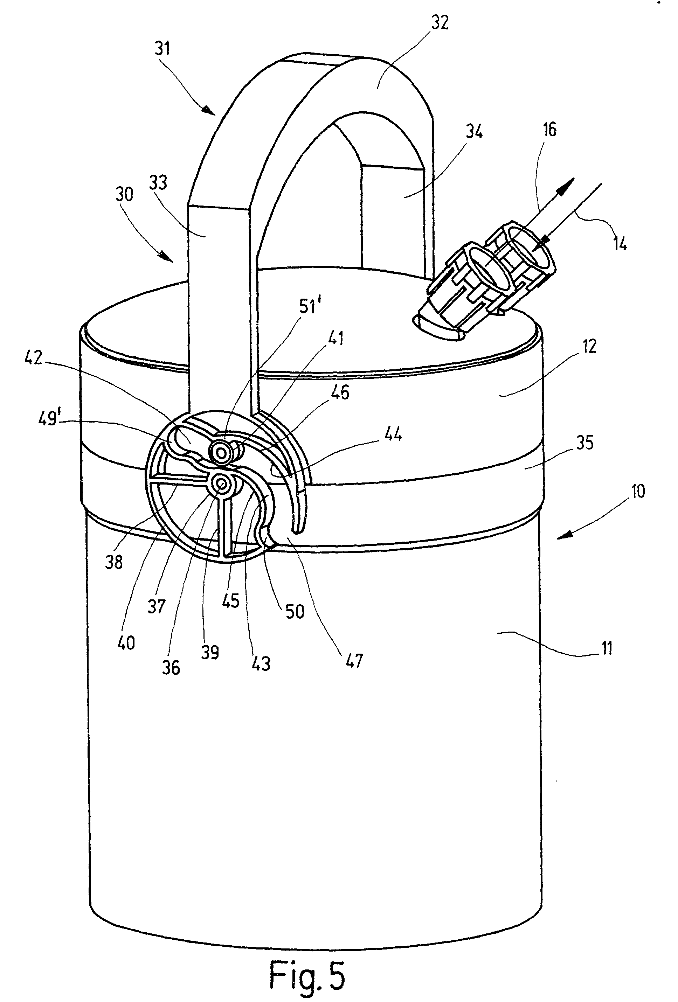

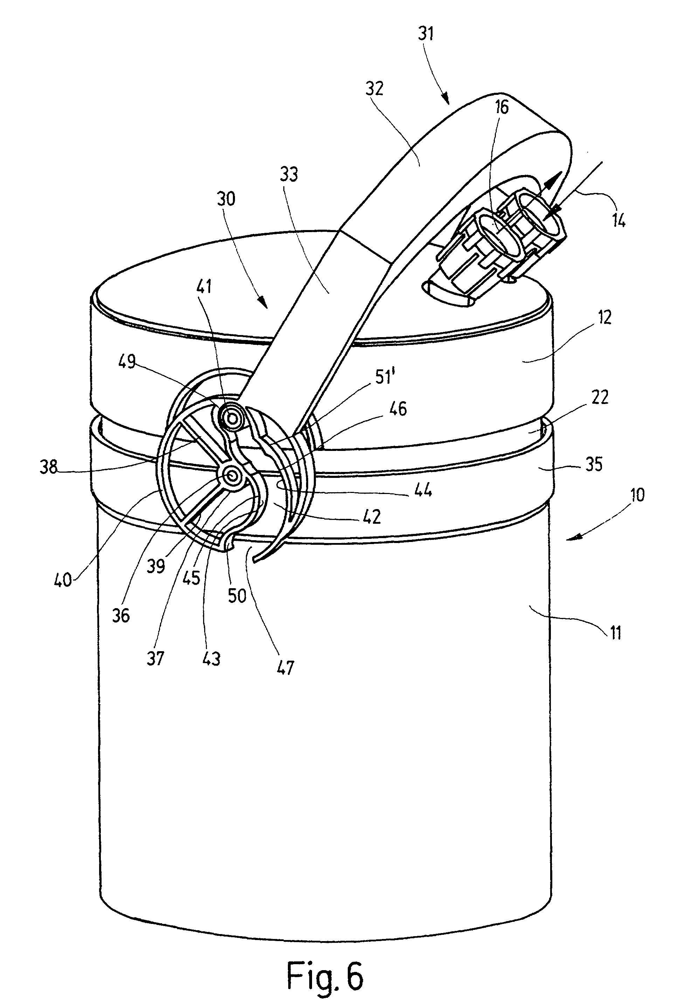

In Fig. 4 ist der Bügel in seiner zweiten Endstellung gezeigt, die hinsichtlich der Abdeckung 12 der abnahmebereiten Endstellung entspricht. In Fig. 5 ist der Bügel 31 in seiner Ausgangsstellung gezeigt, in der die Abdeckung 12 sich in Schließstellung befindet. In Fig. 6 befindet sich der Bügel 31 in seiner ersten Endstellung, in der der Bügel in zur Schwenkung in die zweite Endstellung (Fig. 4) gegensinniger Schwenkrichtung geschwenkt worden ist. Dieser ersten Endstellung in Fig. 6 entspricht eine Stellung der Abdeckung 12 nach Erzeugung des Vakuums und vor Aufhebung des Dichtzustandes.

Die Betätigungseinrichtung 30 gemäß Fig. 4 - 6 weist einen in beiden Schwenkrichtungen überrastbaren Rastsitz 51', vorzugsweise in Form einer Vertiefung in der Senkkurve 44, auf, mittels dessen der Bügel 31 in seiner Ausgangsstellung (Fig. 5) blockierbar ist, die der Schließstellung der Abdeckung 12 entspricht. Der Rastsitz 51' stellt somit im Vergleich zum zweiten Ausführungsbeispiel in Fig. 2, 3 das dem zweiten Endanschlag 51 analoge Rastmittel dar.

Die Betätigungseinrichtung 30 weist ferner vorzugsweise an dem Ende der Hubkurve 43, das mit Abstand auf den Rastsitz 51' folgt, einen zweiten Endanschlag 49' auf, der z.B. durch einen Bogen am Ende der beiden Stege 45,46 gebildet sind, in dem beide Stege 45,46 ineinanderlaufen. Mittels dieses zweiten Endanschlages 49' ist der Bügel 31 in einer ersten Endstellung (Fig. 6) blockierbar, die beim Anheben und/oder Kippen der Abdeckung 12 für die Erzeugung des Vakuums einer entsprechenden Endstellung der Abdeckung 12 vor Aufhebung des Dichtzustandes entspricht. Der Endanschlag 49' stellt somit sicher, daß der Bügel 31 nicht im Uhrzeigersinn über die in Fig. 6 gezeigte erste Endstellung hinaus geschwenkt und damit der Dichtzustand zwischen Abdeckung 12 und Gehäuse 11 ungewollt aufgehoben wird. Damit stellt dieser zweite Endanschlag 49' im Vergleich zum zweiten Ausführungsbeispiel in Fig. 2 und 3 das der Rasteinrichtung 48 in Gestalt des Anschlages 49 analoge Element dar.

Beim dritten Ausführungsbeispiel ist somit der Bügel 31, ausgehend von einer Ausgangsstellung gemäß Fig. 5, in einer Schwenkrichtung, die dem Uhrzeigersinn entspricht, um einen Schwenkwinkel z.B. im Bereich von etwa 30° bis 45° in seine erste Endstellung gemäß Fig. 6 zur Erzeugung des Vakuums schwenkbar. Betrachtet man wiederum die Ausgangsstellung des Bügels 31 gemäß Fig. 5, so ist der Bügel 31 ferner in einer dazu gegensinnigen Schwenkrichtung, somit im Gegenuhrzeigersinn, um einen Schwenkwinkel größer als 90°, z.B. in der Größenordnung von etwa 135°, von der Ausgangsstellung gemäß Fig. 5 in die zweite Endstellung gemäß Fig. 4 schwenkbar, die einer abnahmebereiten Endstellung der Abdeckung 12 entspricht. Man erkennt, daß die Hubkurve 43 auf dem Bereich, der ausgehend von der Ausgangsstellung des Hebels 31 gemäß Fig. 5 bis hin zum zweiten Endanschlag 49 reicht, einen solchen Verlauf hat, daß eine Schwenkbetätigung des Bügels 31 von der Ausgangsstellung gemäß Fig. 5 im Uhrzeigersinn in die erste Endstellung gemäß Fig. 6 eine Hubbewegung des Nockens 41 und damit der Abdeckung 12 erzeugt, die ausreichend ist, um im Innenraum 13 des Außenfilters 10 ein Vakuum zum Ansaugen des Wassers zu erzeugen.

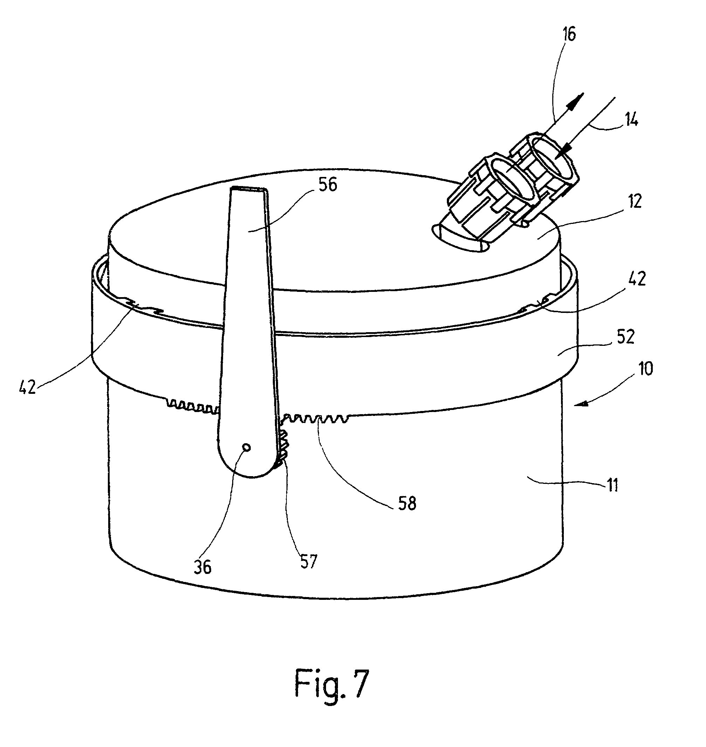

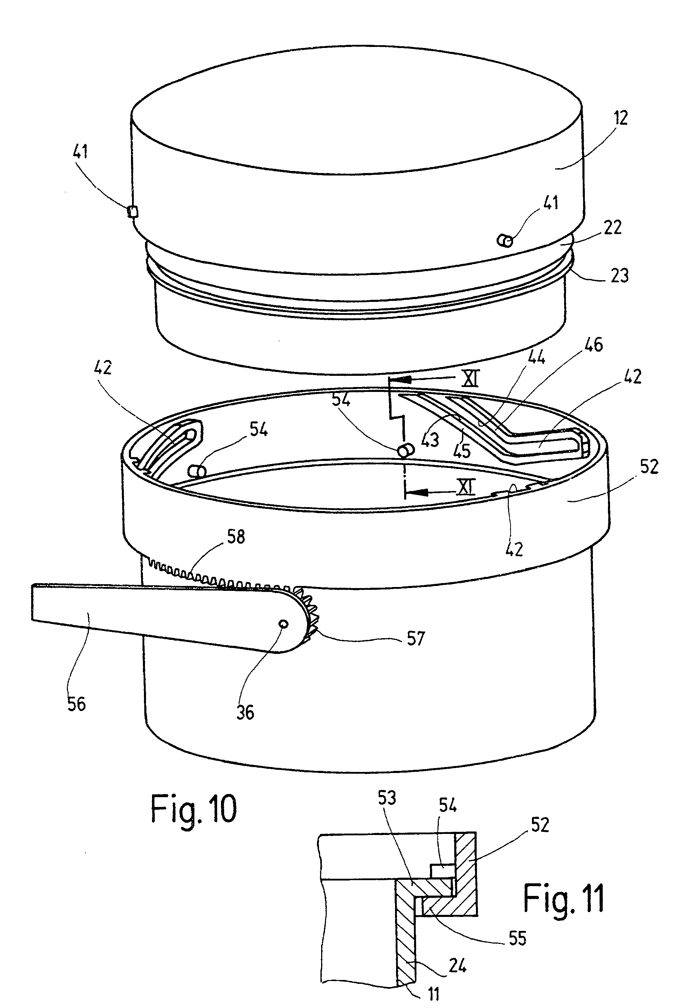

Beim vierten Ausführungsbeispiel in Fig. 7 - 11 sind als getriebliche Mittel zwischen der Abdeckung 12 und dem Gehäuse 11 mehrere, z.B. drei, abstehende Nocken 41 einerseits (Fig. 10) und je Nocken 41 eine schlitzförmige Kulissenbahn 42 andererseits vorgesehen, mit der der jeweilige Nocken 41 in Eingriff steht bzw. in Eingriff bringbar ist. Jede Kulissenbahn 42 ist aus zwei Stegen 45 und 46 mit Hubkurve 43 und Senkkurve 44 gebildet (Fig. 10). Die Nocken 41 sitzen hier außen an der Abdeckung 12, während die zugeordneten Kulissenbahnen 42 an einem Ring 52 vorgesehen sind, der am Gehäuse 11 verliersicher jedoch drehbar gehalten ist. Die Nocken 41 stehen an der Abdeckung 12 nach außen ab. Die zugeordneten Kulissenbahnen 42 befinden sich auf der Innenseite des Ringes 52.

Es versteht sich, daß bei einem anderen, nicht gezeigten Ausführungsbeispiel die Verhältnisse auch kinematisch umgekehrt sein können, d.h. die Kulissenbahnen 42 Teil der Abdeckung 12 und die Nocken 41 Teil des Ringes 52 sein können.

Der Ring 52 ist am oberen Rand 53 des Gehäuses 11 so gehalten, daß der Ring 52 gegen Abbziehen nach oben und gegen Verschieben nach unten gesichert ist. Die Sicherung gegen Verschieben nach unten wird über nach innen vorstehende Stifte 54 am Ring 52 erreicht, die auf der Oberseite des Randes 53 anschlagen. Die Sicherung gegen Abziehen nach oben wird durch einzelne quer abstehende Vorsprünge oder einen umlaufenden Flansch 55 am unteren Rand des Ringes 52 erreicht, die bzw. der am Rand 53 von unten her anschlagen. Zwischen den Stiften 54 und dem Flansch 55 besteht ein derart ausreichender Abstand, daß der Ring 52 relativ zum Rand 53 frei drehbar ist.

Der Ring 52 ist entweder von Hand oder beim gezeigten Ausführungsbeispiel mittels einer Handhabe 56 in Form eines am Gehäuse 11 um eine Schwenkachse 36 schwenkbar gelagerten Hebels drehbetätigbar. Die Handhabe 56 weist ein daran festes Zahnrad 57, Zahnsegment od.dergl. auf, das mit einer gekrümmten Zahnreihe 58 des Ringes 52 in Eingriff steht. Die Zahnreihe 58 ist wie eine Zahnstange gestaltet und befindet sich z.B. an der dem Zahnrad 57 zugewandten Unterseite des Ringes 52.

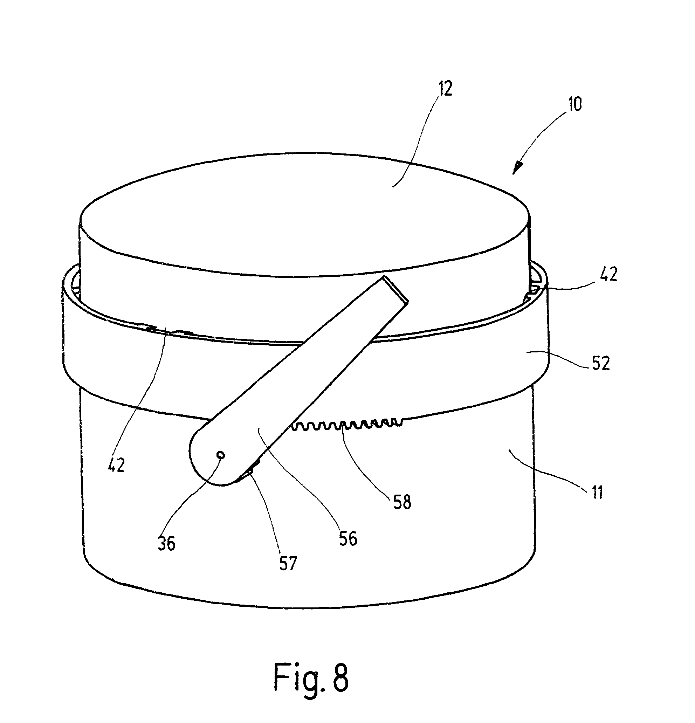

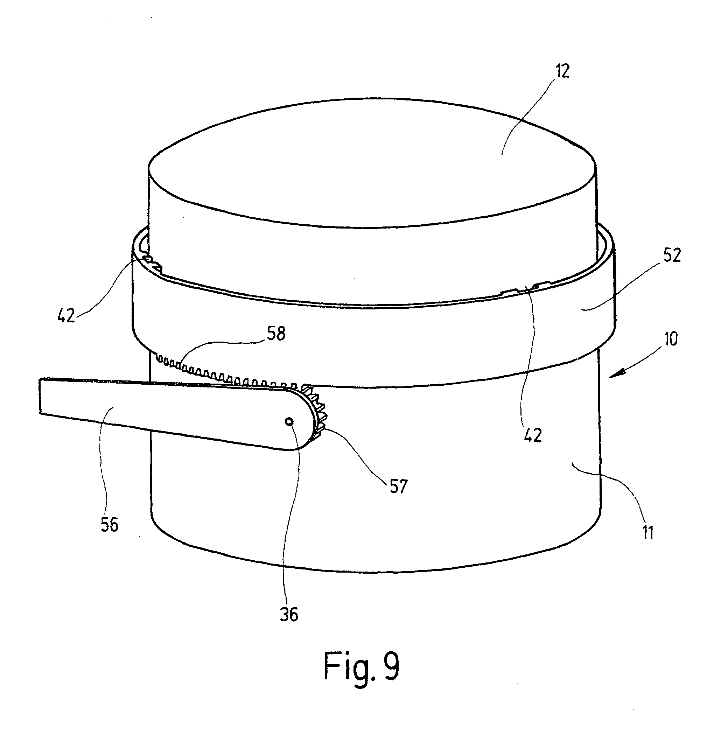

Fig. 7 zeigt einen Zustand, bei dem sich die Handhabe 56 in Ausgangsstellung und die Abdeckung 12 in Schließstellung befindet. In der in Fig. 8 gezeigten Stellung befindet sich die Handhabe 56 in ihrer ersten Endstellung nach Schwenkung im Uhrzeigersinn um die Schwenkachse 36, wobei sich die Abdeckung 12 in einer Endstellung nach Erzeugung des Vakuums und vor der Aufhebung des Dichtzustandes zwischen Abdeckung 12 und Gehäuse 11 befindet. In Fig. 9 ist ein Zustand gezeigt, bei dem die Handhabe 56 ihre zweite Endstellung einnimmt und in der die Abdeckung 12 sich in einer abnahmebereiten Endstellung befindet, in der die Abdeckung 12 so, wie Fig. 10 zeigt, nach oben abgehoben werden kann.

## Patentansprüche

1. Außenfilter, insbesondere für Aquarien, der ein Gehäuse (11) mit einer entfernbaren Abdeckung (12) zum Verschließen des Gehäuseinnenraumes (13) aufweist, dem über eine darin ausmündende Zuflussleitung (14) zu filterndes Wasser zuführbar ist und aus dem über eine Abflussleitung (16) und mittels einer motorisch angetriebenen Pumpe das gefilterte Wasser abführbar ist, wobei eine bedarfsweise betätigbare Einrichtung zur Erzeugung eines Vakuums vorgesehen ist, mittels der durch die mit Wasser verschlossene Zuflussleitung (14) unter Verdrängung enthaltener Luft Wasser dadurch einsaugbar ist, dass das aus Gehäuseinnenraum (13) und anschließender Abflussleitung (16) bestehende und mit der Zuflussleitung (14) kommunizierende System während der Erzeugung des Vakuums als evakuierbarer Druckraum nach außen hermetisch dicht abgeschlossen ist und das Vakuum innerhalb dieses abgeschlossenen Systems erzeugt wird,
**dadurch gekennzeichnet,**
**dass** die Einrichtung zur Erzeugung eines Vakuums aus Teilen (12,11) des Außenfilters selbst gebildet ist, die etwa wie der Kolben in einem Gehäuse einer Pumpe relativ zueinander bewegbar sind.

2. Außenfilter nach Anspruch 1,
**dadurch gekennzeichnet,**
**daß** die Abflußleitung (16) ein Ventil (18) aufweist, das die Abflußleitung (16) bei der Betätigung der Einrichtung zur Erzeugung des Vakuums sperrt und die Abflußleitung (16) nach Ansaugen von Wasser in die Zuflußleitung (14) hinein freigibt.

3. Außenfilter nach Anspruch 2,
**dadurch gekennzeichnet,**
**daß** das Ventil (18) aus einem selbsttätig arbeitenden Ventil, z.B. Rückschlagventil, gebildet ist.

4. Außenfilter nach Anspruch 2,
**dadurch gekennzeichnet,**
**daß** das Ventil (18) aus einem manuell betätigbaren Ventil gebildet ist.

5. Außenfilter nach einem der Ansprüche 1 bis 4,
**dadurch gekennzeichnet,**
**daß** ein in der Abdeckung (12) verlaufende Teil der Zuflußleitung (14) am Auslaß (Abschnitt 19) zum Gehäuseinnenraum (13) ein Ventil (20) aufweist, das nach Ansaugen von Wasser in die Zuflußleitung (14) einen gegensinnigen Rückfluß mit Luftansaugung sperrt.

6. Außenfilter nach Anspruch 5,
**dadurch gekennzeichnet,**
**daß** als Ventil (20) ein Auffangbehältnis (21) für Wasser vorgesehen ist, in das der Auslaß (Abschnitt 19) der Zuflußleitung (14) ausmündet.

7. Außenfilter nach einem der Ansprüche 1 bis 6,
**dadurch gekennzeichnet,**
**daß** zumindest ein Teil des Gehäuses (11) - vorzugsweise etwa wie der Kolben einer Pumpe - relativ zu einem anderen Teil des Gehäuses (11) und/oder der Abdeckung (12) zur Erzeugung eines Vakuums bewegbar ist.

8. Außenfilter nach einem der Ansprüche 1 bis 6,
**dadurch gekennzeichnet,**
**daß** zumindest ein Teil der Abdeckung (12) - vorzugsweise etwa wie der Kolben einer Pumpe - relativ zum Gehäuse (11) zur Erzeugung eines Vakuums bewegbar ist.

9. Außenfilter nach einem der Ansprüche 1 bis 8,
**dadurch gekennzeichnet,**
**daß** die gesamte Abdeckung (12), vorzugsweise in der Ausbildung als die Pumpe mit Motor enthaltender Pumpenkopf, relativ zum Gehäuse (11) zur Erzeugung eines Vakuums bewegbar ist.

10. Außenfilter nach einem der Ansprüche 1 bis 9,
**dadurch gekennzeichnet,**
**daß** die Abdeckung (12), insbesondere der Pumpenkopf, zur Erzeugung eines Vakuums abhebbar und/oder zumindest geringfügig schrägstellbar oder kippbar ist.

11. Außenfilter nach einem der Ansprüche 1 bis 10,
**dadurch gekennzeichnet,**
**daß** ein Teil der Abdeckung (12) in seiner nach Erzeugung des Vakuums erreichten Stellung den Gehäuseinnenraum (13) über eine Entlüftungsöffnung (25) in der Abdeckung (12) oder insbesondere in der Wandung (24) des Gehäuses (11) nach außen entlüftet.

12. Außenfilter, nach einem der Ansprüche 1 bis 11,
**gekennzeichnet durch**
eine an der Abdeckung (12) angreifende Betätigungseinrichtung (30), mittels der die Abdeckung (12) unter Aufhebung des Dichtzustandes bis vorzugsweise zu einer manuellen Abhebbarkeit öffenbar und aus dem Gehäuse (11) heraus bewegbar und gegensinnig nach Aufse.tzen unter Herbeiführung des Dichtzustandes schließbar und in das Gehäuse (11) bewegbar sowie in der Schließstellung halterbar ist.

13. Außenfilter nach Anspruch 12,
**dadurch gekennzeichnet,**
**daß** die Betätigungseinrichtung (30) einen am Gehäuse (11) um eine Schwenkachse (36) schwenkbar gelagerten, die Abdeckung (12) mit Abstand übergreifenden Bügel (31) aufweist.

14. Außenfilter nach einem der Ansprüche 1 bis 13,
**dadurch gekennzeichnet,**
**daß** zwischen der Abdeckung (12) und dem Gehäuse (11) wirksame getriebliche Mittel,wie Nocken (41) einerseits und zugeordnete Kulissenbahnen (42) andererseits,vorgesehen sind.

15. Außenfilter nach Anspruch 14,
**dadurch gekennzeichnet,**
**daß** als getriebliche Mittel zumindest zwei z.B. einander gegenüberliegende abstehende Nocken (41) einerseits und je Nocken in Abstand von der Schwenkachse (36) des Bügels (31) eine Hubkurve (43) und in Abstand von letzterer eine Senkkurve (44), mit der der jeweilige Nocken (41) in Eingriff steht oder in Eingriff bringbar ist, andererseits vorgesehen sind, wobei die Hubkurven (43) und Senkkurven (44) am Bügel (31) und die Nocken (41) an der Abdeckung (12) - oder kinematisch umgekehrt - angeordnet sind.

16. Außenfilter nach Anspruch 15,
**dadurch gekennzeichnet,**
**daß** als Nocken (41) jeweils eine Rolle vorgesehen ist.

17. Außenfilter nach einem der Ansprüche 1 bis 16,
**dadurch gekennzeichnet,**
**daß** die Betätigungseinrichtung (30) zugleich zur Anhebung und/oder zumindest geringfügigen Schrägstellung, z.B. Kippung, der Abdeckung (12) für die Erzeugung des Vakuums dient.

18. Außenfilter nach Anspruch 17,
**dadurch gekennzeichnet,**
**daß** die Betätigungseinrichtung (30) eine Rasteinrichtung (48) aufweist, mittels der der Bügel (31) der Betätigungseinrichtung (30) in einer ersten Endstellung verrastbar ist, die beim Anheben und/oder zumindest geringfügigen Schrägstellen der Abdeckung (12) zur Erzeugung des Vakuums einer Endstellung der Abdeckung (12) vor der Aufhebung des Dichtzustandes entspricht.

19. Außenfilter nach Anspruch 18,
**dadurch gekennzeichnet,**
**daß** die Rasteinrichtung (48) durch einen überrastbaren Anschlag (49) od.dergl. Erhöhung der Hubkurve (43) gebildet ist.

20. Außenfilter nach einem der Ansprüche 17 bis 19,
**dadurch gekennzeichnet,**
**daß** die Betätigungseinrichtung (30) einen ersten Endanschlag (50), vorzugsweise am Ende der Hubkurve (43), aufweist, mittels dessen der Bügel (31) in einer zweiten Endstellung blockierbar ist, die einer dem Anheben und/oder zumindest geringfügigen Schrägstellen der Abdeckung (12) folgenden, abnahmebereiten Endstellung der Abdeckung (12) entspricht.

21. Außenfilter nach Anspruch 20,
**dadurch gekennzeichnet,**
**daß** die Senkkurve (44) mit Abstand vor dem ersten Endanschlag (50) endet und dazwischen ein zum Einfahren des Nockens (41) ausreichender Zwischenraum (Öffnung (47) gebildet ist.

22. Außenfilter nach einem der Ansprüche 17 bis 21,
**dadurch gekennzeichnet,**
**daß** die Betätigungseinrichtung (30) einen zweiten Endanschlag (51), vorzugsweise am Ende der Senkkurve (44), aufweist, mittels dessen der Bügel (31) in einer Ausgangsstellung blockierbar ist, die der Schließstellung der Abdeckung (12) entspricht.

23. Außenfilter nach einem der Ansprüche 17 bis 22.
**dadurch gekennzeichnet,**
**daß** der Bügel (31), ausgehend von seiner Ausgangsstellung, in einer Schwenkrichtung zunächst in seine erste Endstellung und aus dieser heraus in gleicher Schwenkrichtung in seine zweite Endstellung sowie in gegensinniger Schwenkrichtung wieder zurück bis in die Ausgangsstellung schwenkbar ist.

24. Außenfilter nach Anspruch 23,
**dadurch gekennzeichnet,**
**daß** der Bügel (31) über einen Schwenkwinkel größer als 90°, z.B. etwa von 135°, schwenkbar ist.

25. Außenfilter nach einem der Ansprüche 17 bis 21,
**dadurch gekennzeichnet,**
**daß** die Betätigungseinrichtung (30) einen in beiden Schwenkrichtungen überrastbaren Rastsitz (51'), vorzugsweise eine Vertiefung in der Senkkurve (44), aufweist, mittels dessen der Bügel (31) in seiner Ausgangsstellung blockierbar ist, die der Schließstellung der Abdeckung (12) entspricht.

26. Außenfilter nach Anspruch 25,
**dadurch gekennzeichnet,**
**daß** die Betätigungseinrichtung (30) einen zweiten Endanschlag (49'), vorzugsweise an dem Ende der Hubkurve (43), das mit Abstand auf den Rastsitz (51') folgt, aufweist, mittels dessen der Bügel (31) in einer ersten Endstellung blockierbar ist, die beim Anheben und/oder zumindest geringfügigen Schrägstellen der Abdedkung (12) zur Erzeugung des Vakuums einer Endstellung der Abdeckung (12) vor der Aufhebung des Dichtzustandes entspricht.

27. Außenfilter nach Anspruch 25 oder 26,
**dadurch gekennzeichnet,**
**daß** der Bügel (31), ausgehend von seiner Ausgangsstellung,in einer Schwenkrichtung, z.B. um einen Schwenkwinkel etwa von 30° bis 45°, in seine erste Endstellung zur Erzeugung des Vakuums schwenkbar ist.

28. Außenfilter nach Anspruch 27,
**dadurch gekennzeichnet,**
**daß** der Bügel (31), ausgehend von seiner Ausgangsstellung, in einer gegensinnigen Schwenkrichtung um einen Schwenkwinkel größer als 90°, z.B. etwa von 135°, in seine zweite Endstellung schwenkbar ist, die einer abnahmebereiten Endstellung der Abdeckung (12) entspricht.

29. Außenfilter nach einem der Ansprüche 15 bis 28,
**dadurch gekennzeichnet,**
**daß** die Hubkurve (43) und/oder die Senkkurve (44) aus einem etwa bogenförmigen Steg (45,46) gebildet ist, der fester Teil des Bügels (31) ist.

30. Außenfilter nach einem der Ansprüche 1 bis 14,
**dadurch gekennzeichnet,**
**daß** als getriebliche Mittel mehrere abstehende Nocken (41) einerseits und je Nocken (41) eine etwa schlitzförmige, mit Hub- und Senkkurve (43,44) versehene Kulissenbahn (42), mit der der jeweilige Nocken (41) in Eingriff steht oder bringbar ist, andererseits vorgesehen sind, wobei die Nocken (41) an der Abdeckung (12) und die zugeordneten Kulissenbahnen (42) an einem am Gehäuse (11) drehbar gehaltenen Ring (52) - oder kinematisch umgekehrt - angeordnet sind.

31. Außenfilter nach Anspruch 30,
**dadurch gekennzeichnet,**
**daß** die Nocken (41) an der Abdeckung (12) nach außen abstehen und die Kulissenbahnen (42) auf der Innenseite des Ringes (52) vorgesehen sind.

32. Außenfilter nach Anspruch 30 oder 31,
**dadurch gekennzeichnet,**
**daß** der Ring (52) von Hand oder mittels einer Handhabe (56) drehbetätigbar ist.

33. Außenfilter nach Anspruch 32,
**dadurch gekennzeichnet,**
**daß** die Handhabe (56) aus einem am Gehäuse (11) schwenkbar gelagerten Hebel besteht.

34. Außenfilter nach Anspruch 33,
**dadurch gekennzeichnet,**
**daß** die Handhabe (56) ein daran festes Zahnrad (57) oder Zahnsegment aufweist, das mit einer gekrümmten Zahnreihe (58) des Ringes (52), insbesondere an der zugeordneten Unterseite des Ringes (52),in Eingriff steht.

35. Außenfilter nach einem der Ansprüche 30 bis 34,
**dadurch gekennzeichnet,**
**daß** der Ring (52) an einem oberen Rand (53) des Gehäuses (11) verliersicher jedoch drehbar gehalten ist.

## Claims

1. External filter, especially for aquariums, which has a housing (11) with a removable cover (12) for closing the housing interior (13), to which water to be filtered can be supplied via a flow line (14) which opens therein and from which the filtered water can be removed via a discharge line (16) and by means of a motor-driven pump, a device which can be actuated as required for producing a vacuum being provided, by means of which water can be taken in through the flow line (14) closed with water, expelling entrained air, in such a way that the system comprising the housing interior (13) and adjacent discharge line (16) and communicating with the flow line (14) is sealed off hermetically with respect to the exterior as an evacuable pressure chamber during the production of the vacuum, and the vacuum is produced within this sealed-off system, **characterized in that** the device for producing a vacuum is formed by parts (12, 11) of the external filter itself, which can be moved relative to one another in a manner somewhat similar to the piston in a housing of a pump.

2. External filter according to Claim 1, **characterized in that** the discharge line (16) has a valve (18) which shuts off the discharge line (16) during the actuation of the device for producing the vacuum, and opens the discharge line (16) after water has been sucked into the flow line (14).

3. External filter according to Claim 2, **characterized in that** the valve (18) is formed by an automatically operating valve, for example a nonreturn valve.

4. External filter according to Claim 2, **characterized in that** the valve (18) is formed by a valve that can be actuated manually.

5. External filter according to one of Claim 1 to 4, **characterized in that** a part of the flow line (14) that runs in the cover (12) has a valve (20) at the outlet (section 19) to the housing interior (13), which valve shuts off an opposite return flow with intake of air after water has been sucked into the flow line (14).

6. External filter according to Claim 5, **characterized in that** the valve (20) provided is a collecting container (21) for water, into which the outlet (section 19) of the flow line (14) opens.

7. External filter according to one of Claims 1 to 6, **characterized in that** at least part of the housing (11) can be moved relative to another part of the housing (11) and/or the cover (12) - preferably in a manner somewhat similar to the piston of a pump - to produce a vacuum.

8. External filter according to one of Claims 1 to 6, **characterized in that** at least part of the cover (12) can be moved relative to the housing (11) - preferably in a manner similar to the piston of a pump - to produce a vacuum.

9. External filter according to one of Claims 1 to 8, **characterized in that** the entire cover (12), in particular in the design as a pump with a pump head containing a motor, can be moved relative to the housing (11) to produce a vacuum.

10. External filter according to one of Claims 1 to 9, **characterized in that** the cover (12), in particular the pump head, can be raised and/or set slightly obliquely or tilted to produce a vacuum.

11. External filter according to one of Claims 1 to 10, **characterized in that**, in its position reached after producing the vacuum, a part of the cover (12) vents the housing interior (13) to the outside via a vent opening (25) in the cover (12) or in particular in the wall (24) of the housing (11).

12. External filter according to one of Claims 1 to 11, **characterized by** an actuating device (30) which acts on the cover (12), by means of which the cover (12) can be opened, cancelling the sealed state, preferably as far as an ability to be raised manually and can be moved out of the housing (11), and can be closed in the opposite direction after being put in place, bringing about the sealed state, and can be moved into the housing (11) and held in the closed position.

13. External filter according to Claim 12, **characterized in that** the actuating device (30) has a bow (31) which is mounted on the housing (11) such that it can be pivoted about a pivot axis (36) and engages over the cover (12) at a distance.

14. External filter according to one of Claims 1 to 13, **characterized in that** geared means that act between the cover (12) and the housing (11) are provided, such as cams (41) on one side and associated slotted guide tracks (42) on the other side.

15. External filter according to Claim 14, **characterized in that** the geared means provided are at least two, for example mutually opposite, projecting cams (41) on one side and, on the other side, for each cam, at a distance from the pivot axis (36) of the bow (31), a lifting cam curve (43) and, at a distance from the latter, a lowering cam curve (44), with which the respective cam (41) is engaged or can be brought into engagement, the lifting cam curves (43) and lowering cam curves (44) being arranged on the bow (31) and the cams (41) being arranged on the cover (12), or kinematically vice versa.

16. External filter according to Claim 15, **characterized in that** in each case a roller is provided as the cam (41).

17. External filter according to one of Claims 1 to 16, **characterized in that** the actuating device (30) is at the same time used to raise the cover (12) and/or at least set it slightly obliquely, for example tilt it, for the production of the vacuum.

18. External filter according to Claim 17, **characterized in that** the actuating device (30) has a latching device (48), by means of which the bow (31) of the actuating device (30) can be latched in a first end position which, as the cover (12) is raised and/or set at least slightly obliquely to produce the vacuum, corresponds to an end position of the cover (12) before the cancellation of the sealed state.

19. External filter according to Claim 18, **characterized in that** the latching device (48) is formed by a stop (49) or similar elevation of the lifting cam curve (43) which can be latched over.

20. External filter according to one of Claims 17 to 19, **characterized in** the actuating device (30) has a first end stop (50), preferably at the end of the lifting cam curve (43), by means of which the bow (31) can be blocked in a second end position, which corresponds to an end position of the cover (12), ready to be removed, which follows the raising and/or at least slight oblique setting of the cover (12).

21. External filter according to Claim 20, **characterized in that** the lowering cam curve (44) ends at a distance in front of the first end stop (50) and between them there is formed an intermediate space (opening 47) which is sufficient for the cam (41) to move into.

22. External filter according to one of Claims 17 to 21, **characterized in that** the actuating device (30) has a second end stop (51), preferably at the end of the lowering cam curve (44), by means of which the bow (31) can be blocked in an initial position which corresponds to the closed position of the cover (12).

23. External filter according to one of Claims 17 to 22, **characterized in that**, starting from its initial position, the bow (31) can be pivoted in a pivoting direction first of all into its first end position and from the latter in the same pivoting direction into the second end position and, in the opposite pivoting direction, back again as far as the initial position.

24. External filter according to Claim 23, **characterized in that** the bow (31) can be pivoted through a pivoting angle of more than 90°, for example of approximately 135°.

25. External filter according to one of Claims 17 to 21, **characterized in that** the actuating device (30) has a latching seat (51'), preferably a depression in the lowering cam curve (44), which can be latched over in both pivoting directions, by means of which the bow (31) can be blocked in its initial position, which corresponds to the closed position of the cover (12).

26. External filter according to Claim 25, **characterized in that** the actuating device (30) has a second end stop (49'), preferably at the end of the lifting cam curve (43), which follows the latching seat (51') at a distance, by means of which the bow (31) can be blocked in a first end position which, as the cover (12) is lifted and/or set slightly obliquely to produce a vacuum, corresponds to an end position of the cover (12) before the cancellation of the sealed state.

27. External filter according to Claim 25 or 26, **characterized in that**, starting from its initial position, the bow (31) can be pivoted in a pivoting direction, for example through a pivoting angle of approximately 30° to 45°, into its first end position to produce the vacuum.

28. External filter according to Claim 27, **characterized in that**, starting from its initial position, the bow (31) can be pivoted in an opposite pivoting direction through a pivoting angle of more than 90°, for example of approximately 135°, into its second end position, which corresponds to an end position of the cover (12) ready to be removed.

29. External filter according to one of Claims 15 to 28, **characterized in that** the lifting cam curve (43) and/or the lowering cam curve (44) is formed by an approximately arcuate web (45, 46) which is a fixed part of the bow (31).

30. External filter according to one of Claims 1 to 14, **characterized in that** the geared means provided are a plurality of projecting cams (41) on one side and, on the other side, for each cam (41), an approximately slot-like slotted guide track (42) which is provided with a lifting and lowering cam curve (43, 44) and with which the respective cam (41) is in engagement or can be brought into engagement, the cams (41) being arranged on the cover (12) and the associated slotted guide tracks (42) on a ring (52) retained on the housing (11) such that it can be rotated, or kinematically vice versa.

31. External filter according to Claim 30, **characterized in that** the cams (41) project outwards on the cover (12) and the slotted guide tracks (42) are provided on the inside of the ring (52).

32. External filter according to Claims 30 or 31, **characterized in that** the ring (52) can be actuated by hand or by means of a handle (56) so as to rotate.

33. External filter according to Claim 32, **characterized in that** the handle (56) comprises a lever mounted on the housing (11) such that it can be pivoted.

34. External filter according to Claim 33, **characterized in that** the handle (56) has a gear wheel (57) or gear segment which is fixed to it and which is in engagement with a curved row of teeth (58) belonging to the ring (52), in particular on the associated underside of the ring (52).

35. External filter according to one of Claims 30 to 34, **characterized in that** the ring (52) is retained on an upper edge (53) of the housing (11) such that it is secure against being lost but can be rotated.

## Revendications

1. Filtre extérieur, spécialement pour des aquariums, comprenant un corps (11) avec un couvercle amovible (12) pour fermer l'espace intérieur (13) du corps, auquel peut être apporté, par l'intermédiaire d'un tuyau d'arrivée (14) débouchant dans celui-ci, de l'eau à filtrer, et duquel l'eau filtrée peut être refoulée par l'intermédiaire d'un tuyau de départ (16) et grâce à une pompe motorisée, un dispositif pouvant être manoeuvré en cas de besoin pour créer un vide étant prévu, au moyen duquel de l'eau peut être aspirée par le tuyau d'arrivée (14), qui est fermé par de l'eau par la purge de l'air qu'il contient, par le fait que le système composé de l'espace intérieur (13) du corps et du tuyau de départ (16) qui y est raccordé, et qui communique avec le tuyau d'arrivée (14), est fermé de manière hermétiquement étanche par rapport à l'extérieur pour former un espace sous pression évacuable lors de la création du vide, le vide étant créé à l'intérieur dudit système fermé,
**caractérisé en ce que**
le dispositif pour générer un vide se compose de pièces (12, 11) du filtre extérieur même, qui sont mobiles les unes par rapport aux autres à peu près comme le piston dans le corps d'une pompe.

2. Filtre extérieur selon la revendication 1,
**caractérisé en ce que**
le tuyau de départ (16) comprend une vanne (18) qui ferme le tuyau de départ (16) lors de la manoeuvre du dispositif pour créer le vide et qui libère le tuyau de départ (16) après l'aspiration d'eau dans le tuyau d'arrivée (14).

3. Filtre extérieur selon la revendication 2,
**caractérisé en ce que**
la vanne (18) est constituée par une vanne fonctionnant de manière autonome, par exemple un clapet antiretour.

4. Filtre extérieur selon la revendication 2,
**caractérisé en ce que**
la vanne (18) est constituée par une vanne pouvant être manoeuvrée manuellement.

5. Filtre extérieur selon l'une des revendications 1 à 4,
**caractérisé en ce que**
une partie du tuyau d'arrivée (14) courant dans le couvercle (12) présente, à la sortie (partie 19) dans l'espace intérieur (13) du corps, un clapet (20) qui empêche un reflux dans le sens inverse avec appel d'air après l'aspiration d'eau dans le tuyau d'arrivée (14).

6. Filtre extérieur selon la revendication 5,
**caractérisé en ce que**
une cage d'arrêt (21) pour l'eau, dans laquelle débouche la sortie (partie 19) du tuyau d'arrivée (14), est prévue en tant que clapet (20).

7. Filtre extérieur selon l'une des revendications 1 à 6,
**caractérisé en ce que**
au moins une partie du corps (11) peut se déplacer par rapport à une autre partie du corps (11) et/ou par rapport au couvercle (12) - de préférence à peu près comme le piston d'une pompe - pour créer un vide.

8. Filtre extérieur selon l'une des revendications 1 à 6,
**caractérisé en ce que**
au moins une partie du couvercle (12) peut se déplacer par rapport au corps (11) - de préférence à peu près comme le piston d'une pompe - pour créer un vide.

9. Filtre extérieur selon l'une des revendications 1 à 8,
**caractérisé en ce que**
l'ensemble du couvercle (12), de préférence dans la configuration en tant que tête de pompe contenant la pompe avec le moteur, peut se déplacer par rapport au corps (11) pour créer un vide.

10. Filtre extérieur selon l'une des revendications 1 à 9,
**caractérisé en ce que**
le couvercle (12), notamment la tête de pompe, peut être soulevé et/ou au moins incliné ou basculé légèrement pour créer un vide.

11. Filtre extérieur selon l'une des revendications 1 à 10,
**caractérisé en ce que**
une partie du couvercle (12), dans la position qu'il atteint après la création du vide, purge l'air de l'espace intérieur (13) du corps vers l'extérieur par l'intermédiaire d'une ouverture de purge (25) dans le couvercle (12) ou en particulier dans la paroi (24) du corps (11).

12. Filtre extérieur selon l'une des revendications 1 à 11,
**caractérisé par**
un dispositif de manoeuvre (30) agissant sur le couvercle (12), au moyen duquel le couvercle (12), avec la disparition de l'étanchéité, peut être ouvert de préférence jusqu'à offrir la possibilité de son démontage manuel et peut être déplacé hors du corps (11), et peut, en sens inverse, être fermé après mise en place avec rétablissement de l'étanchéité et peut être déplacé dans le corps (11) et maintenu dans la position de fermeture.

13. Filtre extérieur selon la revendication 12,
**caractérisé en ce que**
le dispositif de manoeuvre (30) présente un arceau (31) monté sur le corps (11) de manière pivotante autour d'un axe de pivotement (36) et enjambant à distance le couvercle (12).

14. Filtre extérieur selon l'une des revendications 1 à 13,
**caractérisé en ce que**
des moyens de commande actifs, comme d'une part des cames (41) et d'autre part des coulisses (42) qui leur sont affectées sont prévus entre le couvercle (12) et le corps (11).

15. Filtre extérieur selon la revendication 14,
**caractérisé en ce que**
les moyens de commande prévus se composent d'une part au moins de deux cames (41) dépassantes se faisant par exemple face et d'autre part, pour chaque came, à distance de l'axe de pivotement (36) de l'arceau (31), d'une courbe de levage (43) et, à distance de celle-ci, d'une courbe d'abaissement (44), avec laquelle la came (41) concernée est ou peut être mise en prise, les courbes de levage (43) et les courbes d'abaissement (44) étant disposées sur l'arceau (31) et les cames (41) étant disposées sur le couvercle (12) - ou avec une cinématique inversée.

16. Filtre extérieur selon la revendication 15,
**caractérisé en ce que**
un galet est prévu à chaque fois en tant que came (41).

17. Filtre extérieur selon l'une des revendications 1 à 16,
**caractérisé en ce que**
le dispositif de manoeuvre (30) sert à la fois à soulever et/ou au moins à incliner légèrement, par exemple à basculer, le couvercle (12) pour créer le vide.

18. Filtre extérieur selon la revendication 17,
**caractérisé en ce que**
le dispositif de manoeuvre (30) présente un dispositif d'encliquetage (48) grâce auquel l'arceau (31) du dispositif de manoeuvre (30) peut être encliqueté dans une première position définie qui correspond, lors du levage et/ou au moins de la légère inclinaison du couvercle (12) pour la création du vide, à une position définie du couvercle (12) avant la disparition de l'étanchéité.

19. Filtre extérieur selon la revendication 18,
**caractérisé en ce que**
le dispositif d'encliquetage (48) est formé par une butée encliquetable (49) ou un rehaussement similaire de la courbe de levage (43).

20. Filtre extérieur selon l'une des revendications 17 à 19,
**caractérisé en ce que**
le dispositif de manoeuvre (30) possède une première butée finale (50), de préférence à l'extrémité de la courbe de levage (43), au moyen de laquelle l'arceau (31) peut être bloqué dans une seconde position définie qui correspond à une position définie du couvercle (12), successive au levage et/ou au moins à la légère inclinaison du couvercle (12), dans laquelle celui-ci peut être retiré.

21. Filtre extérieur selon la revendication 20,
**caractérisé en ce que**
la courbe d'abaissement (44) se termine à distance de la première butée finale (50) et **en ce qu'**un espace intermédiaire (ouverture (47)) suffisant pour l'introduction de la came (41) est formé entre elles.

22. Filtre extérieur selon l'une des revendications 17 à 21,
**caractérisé en ce que**
le dispositif de manoeuvre (30) possède une seconde butée finale (51), de préférence à l'extrémité de la courbe d'abaissement (44), au moyen de laquelle l'arceau (31) peut être bloqué dans une position initiale qui correspond à la position de fermeture du couvercle (12).

23. Filtre extérieur selon l'une des revendications 17 à 22,
**caractérisé en ce que**
l'arceau (31) peut être pivoté dans une direction de pivotement à partir de sa position initiale, dans un premier temps jusqu'à sa première position définie, puis, à partir de celle-ci, dans la même direction de pivotement, dans sa seconde position définie et être pivoté, dans la direction de pivotement opposée, de nouveau jusqu'à la position initiale.

24. Filtre extérieur selon la revendication 23,
**caractérisé en ce que**
l'arceau (31) peut être pivoté sur un angle de pivotement supérieur à 90°, par exemple d'environ 135°.

25. Filtre extérieur selon l'une des revendications 17 à 21,
**caractérisé en ce que**
le dispositif de manoeuvre (30) possède un cran (51'), de préférence un renfoncement dans la courbe d'abaissement (44), pouvant être encliqueté dans les deux directions de pivotement et permettant de bloquer l'arceau (31) dans sa position initiale correspondant à la position de fermeture du couvercle (12).

26. Filtre extérieur selon la revendication 25,
**caractérisé en ce que**
le dispositif de manoeuvre (30) possède une seconde butée finale (49'), de préférence à l'extrémité de la courbe de levage (43), suivant à distance le cran (51'), au moyen de laquelle l'arceau (31) peut être bloqué dans une première position définie qui correspond, lors du levage et/ou au moins de la légère inclinaison du couvercle (12) pour la création du vide, à une position définie du couvercle (12) avant la disparition de l'étanchéité.

27. Filtre extérieur selon la revendication 25 ou 26,
**caractérisé en ce que**
l'arceau (31), à partir de sa position initiale, peut être pivoté, dans une direction de pivotement, par exemple d'un angle de pivotement d'environ 30° à 45°, dans sa première position définie pour la création du vide.

28. Filtre extérieur selon la revendication 27,
**caractérisé en ce que**
l'arceau (31), à partir de sa position initiale, peut être pivoté, dans une direction de pivotement opposée, d'un angle de pivotement supérieur à 90°, par exemple d'environ 135°, dans sa seconde position définie qui correspond à une position définie du couvercle (12) où celui-ci peut être retiré.

29. Filtre extérieur selon l'une des revendications 15 à 28,
**caractérisé en ce que**
la courbe de levage (43) et/ou la courbe d'abaissement (44) est formée par une nervure (45, 46) sensiblement en forme d'arc faisant partie intégrante de l'arceau (31).

30. Filtre extérieur selon l'une des revendications 1 à 14,
**caractérisé en ce que**
les moyens de commande prévus se composent d'une part de plusieurs cames (41) dépassantes et d'autre part, pour chaque came (41), d'une coulisse sensiblement en forme de fente (42) munie d'une courbe de levage et d'une courbe d'abaissement (43, 44), avec laquelle la came (41) qui lui est affectée est ou peut être mise en prise, les cames (41) étant disposées sur le couvercle (12) et les coulisses (42) qui leur sont affectées étant disposées sur un anneau (52) fixé de manière libre en rotation sur le corps (11) - ou avec une cinématique inversée.

31. Filtre extérieur selon la revendication 30,
**caractérisé en ce que**
les cames (41) dépassent du couvercle (12) vers l'extérieur et les coulisses (42) sont prévues sur la face intérieure de l'anneau (52).

32. Filtre extérieur selon la revendication 30 ou 31,
**caractérisé en ce que**
la rotation de l'anneau (52) peut être réalisée à la main ou au moyen d'une manette (56).

33. Filtre extérieur selon la revendication 32,
**caractérisé en ce que**
la manette (56) est constituée par un levier monté de manière pivotante sur le corps (11).

34. Filtre extérieur selon la revendication 33,
**caractérisé en ce que**
la manette (56) possède une roue dentée (57) ou un segment denté solidaire de celle-ci, en prise avec une rangée de dents courbe (58) de l'anneau (52), notamment sur la face inférieure de l'anneau (52) qui lui est affectée.

35. Filtre extérieur selon l'une des revendications 30 à 34,
**caractérisé en ce que**
l'anneau (52) est fixé de manière imperdable, mais libre en rotation, sur un bord supérieur (53) du corps (11).
